(19) **Europäisches Patentamt / European Patent Office / Office européen des brevets**

(11) **EP 2 897 313 A1**

(12) **EUROPEAN PATENT APPLICATION**

(43) Date of publication:
**22.07.2015 Bulletin 2015/30**

(51) Int Cl.:
*H04J 4/00* (2006.01)  *H04L 5/00* (2006.01)
*H04J 13/00* (2011.01)

(21) Application number: **14151465.3**

(22) Date of filing: **16.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **NWave Technologies Ltd**
**West Sussex RH16 3LH (GB)**

(72) Inventor: **Orlov, Ivan**
**1066 Nicosia (CY)**

(74) Representative: **Oficina Ponti, SLP**
**C. Consell de Cent, 322**
**08007 Barcelona (ES)**

(54) **Method of transmitting a data packet, with spreading / de-spreading by using a combination of TDMA and FDMA**

(57)    Method of transmitting a data packet, with spreading / de-spreading by using a combination of TDMA and FDMA, from a plurality of transmitters (101) to at least a base station (100), said method comprising the steps of spreading the data packet into a plurality of sub-packets (Seg1, Seg2,..., Segn), generating a header (201) comprising the transmitter number (DN), the packet number (PN) and the transmission time stamp (H) according to the clock of the transmitter (101), sending the header (201) from a transmitter (101) to the base station (100), sending the sub-packets (Seg1, Seg2,..., Segn) at at least two different times (t1,...,ti, ... tn) and at least two different frequencies (f1,..., fi, ..., fn), wherein the times (t1,...,ti, ... tn) being defined with discrete times intervals (DT) from a time moment (T0), the frequencies (f1,..., fi, ..., fn) being defined with discrete frequency intervals (FD) from a central frequency (FS), the discrete times intervals (DT) are a function of the packet number (PN), the transmitter number (DN), the segment duration (TS), the central frequency (FS) is a function of the transmission time stamp (H) and the transmitter number (DN).

Fig. 3

EP 2 897 313 A1

**Description**

The present invention relates to a method which allows the transmission of unsynchronized and independent packets from a multitude of terminals in the uplink to a single or few base stations. Collision is minimized by splitting a single packet into shorter fragments. Prior to the packet transmission, a header containing the information on transmitter, splitting procedure, transmission times and packet number is generated. The packet fragments are transmitted at different frequencies and different time delays. It is the information in the header that determines the packet fragments transmission procedure.

**BACKGROUND OF THE INVENTION**

M2M systems are increasing in popularity and deployment. In the general case, there is a need for continuous monitoring of different complex distributed geographical systems, including ecological monitoring networks, systems of integrity control of structures, buildings, pipelines and others. With regard to the mission, only one-way communication is required. It is partly conditioned by requirements of simplicity, cost and energy effectiveness of a transmitter. Such systems often apply band-limited communication at low speed. Interference disrupts packet transmission in the environment of a big city or in case of a large number of transmitters.

The existing systems transmit band-limited signal and split packets by frequencies. Band-limited transmission also ensures interference protection to some extent. Nevertheless, additional methods decreasing probability of disruption of a packet caused by interference or by collision between packets from different transmitters are required in high interference signalling environment.

For minimising the probability of collision, known in the art are methods of transmitting a data packet, with spreading / de-spreading by using a combination of TDMA and FDMA, from a plurality of transmitters to at least a base station, said method comprising the steps of:

- spreading the data packet into a plurality of sub-packets;
- generating a header, said header comprising at least:

  o the transmitter number;
  o the packet number;
  o the transmission time stamp according to the clock of the transmitter;

- sending the header from a transmitter to the base station;
- sending the sub-packets at at least two different times and at least two different frequencies;

EP 0 689 310 B1, considered as the closest prior art, discloses such a method which involves separating each data packet into sub-packets containing header information. The header information includes synchronisation bits followed by processing information exchange bits. All the sub-packets conform to a standard structure formed from orthogonal segments. The headers are transmitted in synchronism and with period at least equal to the sub-packet standard. The subpackets can be compressed according to any compression law. At the receiver, the sub-packet standard is stored in memory allowing expansion of the data packets.

EP 0 853 400 discloses a radio transmission method which operates with a mixed frequency and time division multiplex method FDMA/TDMA, in which a relatively broad frequency band is divided according to tha FDMA method into a plurality of carrier frequency ranges and a plurality of time slots distributed in a frame structure formed on each carrier frequency level according to the TDMA method.

However, starting form these combined methods, there is a still a need to reduce even more the collision probability.

**DESCRIPTION OF THE INVENTION**

The present invention relates to a method specially designed for data acceptance and transmission in one-way M2M radio-networks of transmitters allowing reduction of probability of collision between packets, as well as a decrease of impact of external interference on the communication quality.

Specifically, the present invention proposes a method of transmitting a data packet, with spreading / de-spreading by using a combination of TDMA and FDMA, from a plurality of transmitters to at least a base station, said method comprising the steps of:

- spreading the data packet into a plurality of sub-packets;

- generating a header, said header comprising at least:

  ○ the transmitter number DN;
  ○ the packet number PN;
  ○ the transmission time stamp H according to the clock of the transmitter;

- sending the header from a transmitter to the base station;
- sending the sub-packets at at least two different times $(t_1,...,t_i, ... t_n)$ and at least two different frequencies $(f_1,..., f_i, ... , f_n)$;

characterised in that:

- the times $(t_1,...,t_i, ... t_n)$ being defined with discrete times intervals DT from a time moment T0;
- the frequencies $(f_1,..., f_i, ..., f_n)$ being defined with discrete frequency intervals FD from a central frequency FS;
- the discrete times intervals DT are a function of at least the following parameters:

  the packet number PN;
  the transmitter number DN;
  the segment duration TS;

- the central frequency FS is a function of the transmission time stamp H and the transmitter number DN;

Preferably, the functions are non-linear.

More preferably, the function for the discrete times intervals DT is:

$$DT = T0 + (PN + DN \bmod 256) * k * TS,$$

Wherein k is a constant $\in [1;2]$ and
T0 is such that T0>>TS and T0>>512*k*TS.

Preferably, the function for the central frequency FS is:

$$FS = F0 + FB/24*(H+DN)\bmod 24$$

Wherein FB is the bandwidth and F0 is the carrier frequency.

More preferably, the times $(t_1,...,t_i, ... t_n)$ are obtained by adding m times the discrete time interval to a reference time; and the frequencies $(f_1,..., f_i, ... , f_n)$ are obtained by adding n times the discrete frequency interval to the central frequency FS, m and n being pseudorandom numbers.

In other words, the method includes fragmentation of a packet prior to its transmission, formation of a header indicating packet sequence number, transmitter number, transmission time stamp according to the inner clock of the transmitter.

According to the method, packet fragments are transmitted with different frequency shifts and with different time delays with regard to the header. These frequency shifts and delays are unambiguously calculated by a non-linear function with the arguments indicated in the header, i.e. packet number, device number, and time stamp. The function is defined in such a way that a decrease of probability of collision and increase of probability of delivery in high interference signalling environment are provided.

The method permits repetition of packets in order to increase the probability of delivery.

Pursuant to the method, the header may be transmitted in a separate frequency range with increased capacity or with reduced data transmission speed. The abovementioned possibilities are required for increase of probability of the header delivery, otherwise header data damage may cause failure of message acceptance.

The receiving end receives the transmitted header and obtains the frequency shifts at frequencies, where the remaining packet fragments are expected, as well as the time delay of said packet fragments.

The advantages of this method are the following: Packet loss is significantly decreased since the packet fragmentation and repeated fragment transmission ensure a significant increase in packet delivery probability in the case of bursty (short one with regard to time of transmission of the entire packet) interference, as well as in the case of single blinking caused by transmitter movement, changes of signal phase and amplitude caused by other reasons.

## BRIEF DESCRIPTION OF THE DRAWINGS

For a better understanding of the aforementioned, drawings are attached wherein, schematically and only by way of non-limitative example, a practical embodiment is represented.

Fig. 1 shows the diagram of the network where the inventive method is applied.

Fig. 2 shows the Base station diagram.

Fig. 3 shows a signal spectrogram according to the invention.

Fig. 4 shows a table with a distribution of segments of the package by frequencies and time

Fig. 5 represents the radio range.

Fig. 6 represents the probability of delivery per package length.

## DESCRIPTION OF A PREFERRED EMBODIMENT

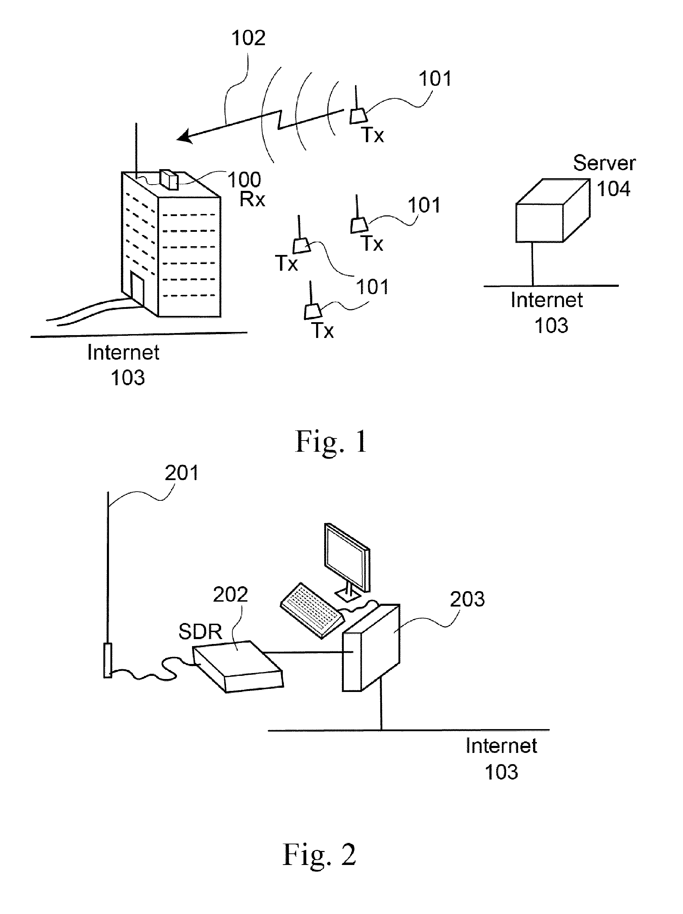

Fig. 1 shows the network diagram with a base station 100 on the roof, Transmitters 101 on the ground, Bidirectional radio links between the transmitters on the ground and the receiver on the roof 102, the Internet network 103, and a server 104.

Fig. 2 shows a Base station diagram, with an antenna 201, an SDR radio 202, a computer 203, the Internet network 103.

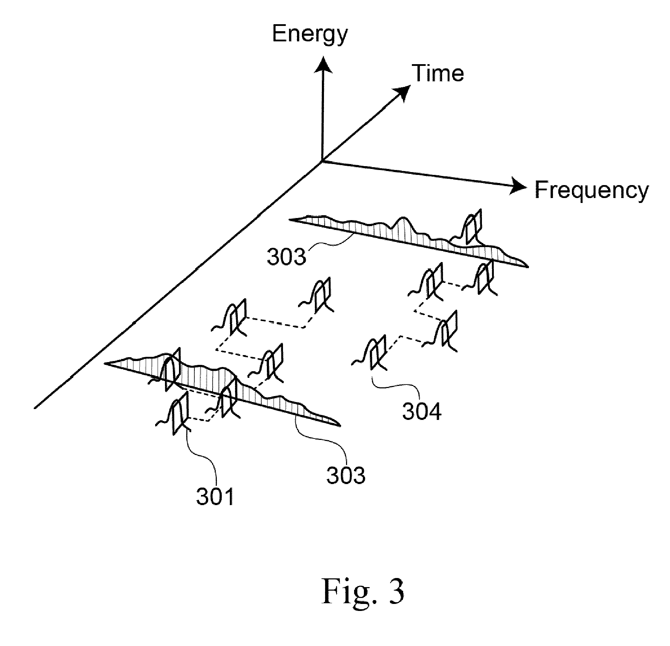

Fig. 3 shows the signal spectrogram with a package in time 301, package segment 302, an Interference 303 and another package 304.

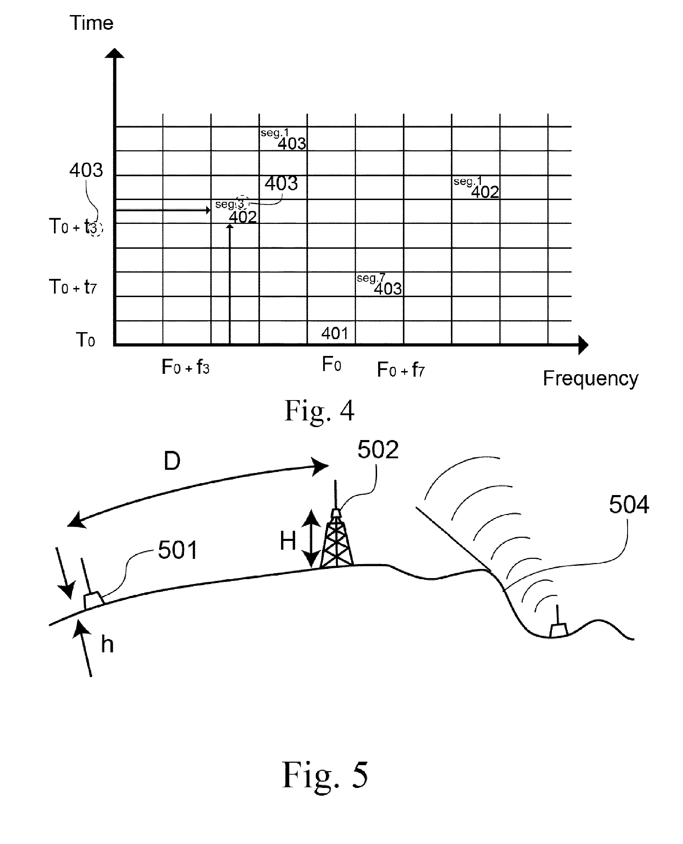

Fig. 4 shows a table - distribution of segments of the package by frequencies and time, with a header 401, package segments 402, package segment number 403, package segment delay 404 and package segment carrier frequency shift 405.

Fig. 5 shows the radio range, with a transmitter on the open ground at h height 501, a receiver on the open ground at H height 502, wherein D is the distance between the receiver and the transducer 503, and surface topography 504.

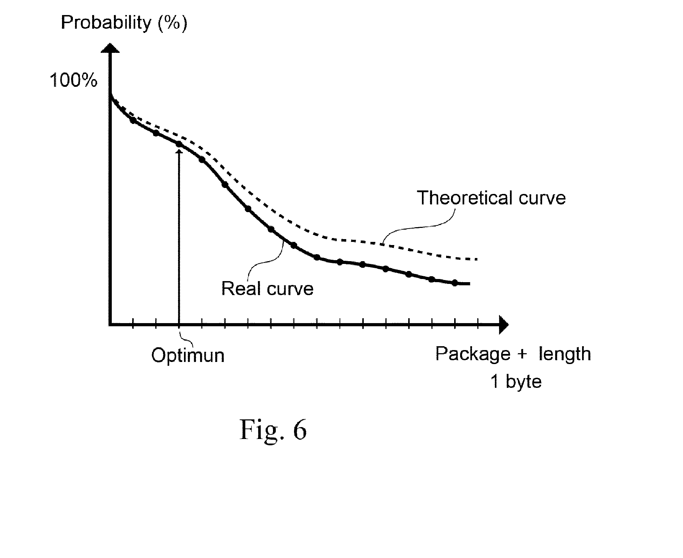

Fig.6 represents the probability of delivery per package length 601.

Fig. 1 shows the standard part of M2M radio communications system. In an elementary case, the communication is one-directional 102. The receiving Base station 100 is installed on the building roof or on an elevation in order to extend the range.

Thus, for example, at the carrier frequency of transmission and reception of the signal of 868 MHz the wavelength of radio emission is about 30 cm. Hills and buildings are much larger, that is why the receiving station shall be located as high as possible in order to cover a larger area.

Transmitters 101 are located, as a rule, on the ground level or inside the buildings. Transmitters 101 send packages asynchronously, according to their schedule, or randomly, or after the event fixed by the sensor integrated with the transmitter.

The messages received by Base station 100 are transmitted to the Internet network 103 to server 104.

The requirements for M2M networks are a signal receiving/transmitting range, energy efficiency, low power of the transmitter and use of a license-exempt band.

The requirement for the energy efficiency restricts the use of additional proprietary information.

The need to achieve the maximum range at low power (10-25 mW) and use of a license-exempt band (filled with a signal from other devices) is an engineering challenge to the creator of the system.

There are ample methods available in the literature to calculate the communication range 503.

The maximum sensitivity of the receiver is provided by means of the bitrate reduction. But due to presence of background interference, the increase of the sensitivity above certain level has no sense. The major problem is to provide reliability of transmission in case interference from other devices on the air, reduction of probability of collisions of various transmitters of M2M network. Collisions between transmitters reduce the maximum quantity of transmitters, which can send messages within the network. And this point determines the economic efficiency of the network.

The present invention offers a communication method, which provides for higher resistance to interference, reduces the probability of collisions of messages and allows to receive messages even from the moving transmitter.

*Division of the data package into segments*

In order to increase the energy of one data bit, the data transmission rate in M2M can reach 100 baud. Then the package of 20 bytes will be transmitted for 1.6 seconds.

Fig. 6 shows the diagram of probability of the package delivery in conditions of the fixed interference environment. It can be seen that if the package is transmitted without division, the delivery probability is lower as compared with the package transmitted in parts at independent moments of time.

In the fixed interference environment, when the experimental dependence of the package delivery probability from its duration is obtained, one can find the optimal duration of the package segment TS.

Should data be transmitted during movement (on the body of a moving person or from the moving vehicle), then, similarly, the dependence of the package delivery probability from its duration will be obtained experimentally exactly in case of the standard application of the sensor.

*Header of the data package*

As an example, before the package, the header shall be transmitted, which contains:

| Quantity of bits | Description |
|---|---|
| 16 | Preamble |
| 8 | Synchrobyte |
| 20 | Device number |
| 8 | Package number |
| 8 | Hour of the day (from 0 to 23) |

Then the package is divided into segments with duration T, then packages number i are twice transmitted to moments $t_{1i}, t_{2i}$ with frequency shifts $f_{1i}, f_{2i}$ against the carrier frequency, at which the header is transmitted.

The set of time and frequency shifts is calculated by R function using the following header data: device number, package number, hour of the day (from 0 to 23).

*Method of the data package transmission*

The method of the data package transmission is shown in fig. 4.

Time moment T0, signal carrier frequency F0 are transmitted first. Then $t_{1i}$, $t_{2i}$, $f_{1i}$, $f_{2i}$ are calculated for each segments on the basis of the header. Herewith, $t_{1i}$, $t_{2i}$ shall not be necessarily in the ascending order.

All times $t_{1i}$, $t_{2i}$ are defined with discrete DT.

All frequencies $f_{1i}$, $f_{2i}$ are defined with discrete f.

Then each segment is transmitted at least twice at moments of time $t_{1i}$ and $t_{2i}$, starting from time moment T0 and at frequencies $f_{1i}$, $f_{2i}$ - the shift against frequency FS.

According to the invention, the header 201 comprises at least:

- o the transmitter number DN;
- o the packet number PN;
- o the transmission time stamp H according to the clock of the transmitter 101;

And therefore, the discrete times intervals DT are a function of at least the following parameters:

- the packet number PN;
- the transmitter number DN;
- the segment duration TS;

Wherein the central frequency FS is a function of the transmission time stamp H and the transmitter number DN;

In a preferred embodiment, the function for the discrete times intervals DT is:

$$DT = T0 + (PN + DN \bmod 256) * k * TS,$$

Wherein k is a constant $\in [1;2]$ and
T0 is such that T0>>TS and T0>>512*k*TS.

The function for the central frequency FS is:

$$FS = F0 + FB/24*(H+DN)\bmod 24$$

Wherein FB is the bandwidth and F0 is the carrier frequency.

Finally, the times $(t_1,...,t_i, ... t_n)$ are obtained by adding m times the discrete time interval to a reference time; and the frequencies $(f_1,..., f_i, ... , f_n)$ are obtained by adding n times the discrete frequency interval to the central frequency FS.

m and n being pseudorandom numbers.

*Transmitters' synchronization*

Reduction of collision probability is achieved by means of rough synchronization of the transmitters. Transmitter 101 contains a real-time clock. The time shift does not exceed several minutes for the whole life of the transmitter. That is why the hour of the day at each of the transmitters is known with sufficient accuracy.

Due to it, it is possible to form nonoverlapping communications channels by dividing the transmitters into groups according to their identification number.

It is known that if N transmitters send a message simultaneously within the same frequency range with an evenly distributed carrier frequency, then the probability of collision will be higher as compared with transmission of messages within the same frequency range with transducers divided into M groups, where each group covers an equal part of this frequency band. In the limiting case, if each transmitter sends messages within its own frequency range, then collision between various transmitters becomes impossible.

But this distribution of transmitters by groups cannot be fixed in time as in case of increase of the interference level at any of the frequency ranges one or several groups of transmitters will be in worse conditions when receiving a signal from them. That is why R function shall redistribute the transmitters in the frequency subranges every new hour.

Advantages of the inventive Method

The advantages of the proposed method can be summarised as follows:

1) The distribution of the active transmitters in the frequency domain so as to reduce the likelihood of collisions among them.
2) Coarse synchronization of the internal clock transmitters allows to change the frequency in which the transmitters are working, thus reducing the probability of crossing long noise/interference.
3) Distribution of packet fragments over frequencies within the subband so as to reduce the probability of collision (not completely eliminate, because the transmitters are not exactly synchronized in frequency and time).
4) Packet fragmentation allows to transfer data from moving objects at a lower receiver error rate.
5) Packet fragmentation and temporal diversity increases the probability of packet delivery in case of shot and impulse noise.

*Example of a non-linear function R*

The header of a packet is an argument for the function R.

The header contains: Sync word, packet number (PN), device number (DN), hour(H) (0-23).

The result of the function R are set of times {Ti} and set of frequencies {Fi}.

Algorithm:

1) Firstly we define variable DT - time discrete.

$$DT = T0+(PN+DN \bmod 256)*k*TS,$$

Wherein:

PN - packet number,
DN - device number,
k - 1.2, ..., 1.5,
TS - Segment duration, (TS=1/buadrate*bits_in_segment)
T0 - optimal delay,T0>>TS, T0 > 512*k*TS

Then we define TN = T/T0 wherein T is the maximum duration of the packet.
2) Then, we choose the frequency band.
Fs - central frequency of the frequency band:

$$Fs=F0+FB/24*(H+DN)\bmod24$$

Wherein:

H - hour (0-23),
DN - device number,
FB - bandwidth,
F0 - initial frequency.

And then:

$$FN=FB/FD$$

FN - number of channels for each frequency band,
FB - bandwidth,
FD - frequency discrete (depends on chosen modulation).

Therefore, the total number of channelsis FN*24,
**[0064]**   Wherein FN is the number of channels for each band and 24 is the number of bands (because H = 0..23).
3) Then we use the pseudorandom predetermined array RAND[ ] for getting distribution frequencies channels inside chosen frequency band (fn=O..FN-1) and times (tn=0..TN-1).
Sets of discrete times tn and discrete frequencies fn:
The first element of RAND[ ] we take StartElement = F(PN,DN) (for example DN mod constant1 + PN*constant2, or a more complicate non-linear determined function). Then the times of segment transmitting are:

$$Ti=tn*DT,$$

and frequencies

$$Fi = FS(H) + (fn-FN/2)*FD.$$

Advantages:

1) Using 24 frequency bands allows to separate devices and decrease the probability of collisions.

2) Using variable time discrete allows to decrease multiple collisions between pairs of devices. Even if the tn (discrete time in time distribution) coincide, Ti=tn*DT will vary.

*Numerical example:*

Header: PN=13, DN=12000, H = 12

1) T0 = 10s, TS=0,01 s DT=10+(13+12000mod256)*1.5*0,01 = 13,555s - time discrete TN=T/ TO=200/10=20.

2) F0=868MHz, FB=50kHz, Fs=868+(12+13) mod 24*0,05=868,05kHz, bandwidth - 50kHz. Frequency discrete (step) - FD = 1 kHz= 50kHz/FN , FN - number of channels for each band - 50.

3) Number of segments = 3, they are repeated twice. 6 segments should be sent.

RAND[ ]={13,98,8,22,53,14,17,33,87,64,89,50,0,77,40,22,27,90,2,12,35,80....}
StartElement=(DNmod10+PN*1)=13.
RAND[13...] ={40,22,27,90,2,12,35,80,89,43,5,76,79,96,29..}
FN = 50.
Then fn={RAND[i++]modFN, RAND[i++]modFN, RAND[i++]modFN, RAND[i++]modFN, RAND[i++]modFN, RAND[i++]modFN}={40,22,27,40,2,12}.
TN = 20.
Then tn={RAND[i++]%TN, RAND[i++]% TN, RAND[i++]% TN, RAND[i++]% TN, RAND[i++]% TN, RAND[i++]% TN }={15,0,9,3,5,16}.

Resulting FDMA/TDMA Scheme:

| Segments | Frequency (MHz) | Time (s) |
|---|---|---|
| Seg1 | 868,05+0,001*40=868,090 | 15*13.555=203,325 |
| Seg1 | 868,05+0,001*22=868,072 | 0*13.555=0 |
| Seg2 | 868,05+0,001*27=868,077 | 9*13.555=121,995 |
| Seg2 | 868,05+0,001*40=868,090 | 3*13.555=40,665 |
| Seg3 | 868,05+0,001*2=868,052 | 5*13.555=67,775 |
| Seg3 | 868,05+0,001*12=868,062 | 16*13.555=216,88 |

Although reference has been made to specific embodiments of the invention, it is apparent to one skilled in the art that the method described is susceptible to numerous variations and modifications, and that all the details mentioned can be substituted by other technically equivalent, without departing from the scope of protection defined by the appended claims.

**Claims**

1. Method of transmitting a data packet, with spreading / de-spreading by using a combination of TDMA and FDMA, from a plurality of transmitters (101) to at least a base station (100), said method comprising the steps of:

    - spreading the data packet into a plurality of sub-packets (Seg1, Seg2,..., Segn);
    - generating a header (201), said header (201) comprising at least:

        o the transmitter number (DN);
        o the packet number (PN);
        o the transmission time stamp (H) according to the clock of the transmitter (101);

- sending the header (201) from a transmitter (101) to the base station (100);
- sending the sub-packets (Seg1, Seg2,..., Segn) at at least two different times ($t_1$,...,$t_i$, ... $t_n$) and at least two different frequencies ($f_1$,..., $f_i$, ... , $f_n$);
**characterised in that**:
- the times ($t_1$,...,$t_i$, ... $t_n$) being defined with discrete times intervals (DT) from a time moment (T0);
- the frequencies ($f_1$,..., $f_i$, ... , $f_n$) being defined with discrete frequency intervals (FD) from a central frequency (FS);
- the discrete times intervals (DT) are a function of at least the following parameters:

    the packet number (PN);
    the transmitter number (DN);
    the segment duration (TS);

    - the central frequency (FS) is a function of the transmission time stamp (H) and the transmitter number (DN);

2. Method according to claim 1, wherein the functions are non-linear.

3. Method according to any of the previous claims, wherein the function for the discrete times intervals (DT) is:

$$DT = T0 + (PN + DN \bmod 256) * k * TS,$$

Wherein k is a constant $\in [1;2]$ and
T0 is such that T0>>TS and T0>>512*k*TS.

4. Method according to any of the previous claims, wherein the function for the central frequency (FS) is:

$$FS = F0 + FB/24*(H+DN)\bmod 24$$

Wherein FB is the bandwidth and F0 is the carrier frequency.

5. Method according to any of the previous claims wherein:

    the times ($t_1$,...,$t_i$, ... $t_n$) are obtained by adding m times the discrete time interval to a reference time; and
    the frequencies ($f_1$,..., $f_i$, ... , $f_n$) are obtained by adding n times the discrete frequency interval to the central frequency (FS)
    m and n being pseudorandom numbers.

Fig. 1

Fig. 2

Fig. 3

Time

seg.1
403

403

403

seg.1
402

seg.3
402

$T_0 + t_3$

seg.7
403

$T_0 + t_7$

$T_0$

401

$F_0 + f_3$          $F_0$     $F_0 + f_7$

Frequency

Fig. 4

D

502

504

H

501

h

Fig. 5

Fig. 6

Europäisches
Patentamt

European
Patent Office

Office européen
des brevets

## EUROPEAN SEARCH REPORT

**Application Number**

EP 14 15 1465

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 5 864 577 A (RAMEL LOUIS [FR]) 26 January 1999 (1999-01-26) | 1,2,5 | INV. H04J4/00 |
| A | * columns 1-4 * <br> * figures 1-4 * | 3,4 | H04L5/00 <br> H04J13/00 |
| X | US 5 850 390 A (RAMEL LOUIS [FR]) 15 December 1998 (1998-12-15) <br> * figures 1-3 * <br> * columns 1-4 * | 1,2,5 | |

TECHNICAL FIELDS
SEARCHED      (IPC)

H04J
H04L

The present search report has been drawn up for all claims

| Place of search | Date of completion of the search | Examiner |
|---|---|---|
| The Hague | 10 April 2014 | Anghel, Paul |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 15 1465

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2014

| Patent document cited in search report | | Publication date | Patent family member(s) | | Publication date |
|---|---|---|---|---|---|
| US 5864577 | A | 26-01-1999 | CA | 2152517 A1 | 25-12-1995 |
| | | | DE | 69532569 D1 | 25-03-2004 |
| | | | DE | 69532569 T2 | 16-12-2004 |
| | | | EP | 0689310 A1 | 27-12-1995 |
| | | | FR | 2721784 A1 | 29-12-1995 |
| | | | JP | H0818602 A | 19-01-1996 |
| | | | US | 5864577 A | 26-01-1999 |
| US 5850390 | A | 15-12-1998 | CA | 2177122 A1 | 24-11-1996 |
| | | | EP | 0744846 A1 | 27-11-1996 |
| | | | FR | 2734683 A1 | 29-11-1996 |
| | | | IL | 118085 A | 17-08-1999 |
| | | | US | 5850390 A | 15-12-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0689310 B1

- EP 0853400 A